Europäisches Patentamt

**(19)** European Patent Office

Office européen des brevets

**(11)** Numéro de publication : **0 323 789 B1**

**(12)** # FASCICULE DE BREVET EUROPEEN

**(45)** Date de publication du fascicule du brevet :
**16.10.91 Bulletin 91/42**

**(51)** Int. Cl.⁵ : **G01P 3/48, F16C 19/52**

**(21)** Numéro de dépôt : **88403370.5**

**(22)** Date de dépôt : **30.12.88**

**(54)** Moyeu de roue de véhicule automobile.

**(30)** Priorité : **08.01.88 FR 8800121**

**(43)** Date de publication de la demande :
**12.07.89 Bulletin 89/28**

**(45)** Mention de la délivrance du brevet :
**16.10.91 Bulletin 91/42**

**(84)** Etats contractants désignés :
**DE ES GB IT SE**

**(56)** Documents cités :
**DE-A- 2 756 930**
**FR-A- 2 558 223**
**FR-A- 2 574 501**

**(73)** Titulaire : **S.N.R. ROULEMENTS**
**Boîte Postale 17 1, rue des Usines**
**F-74010 Annecy Cédex (FR)**

**(72)** Inventeur : **Nantua, René**
**Le Cret**
**F-74330 Sillingy (FR)**
Inventeur : **Guers, Roger**
**23, Chemin des Amarantes**
**F-74600 Seynod (FR)**
Inventeur : **Peilloud, Fernand**
**Hery sur Alby**
**F-74540 Alby-sur-Cheran (FR)**

**(74)** Mandataire : **Ernst-Schonberg, Michel**
**REGIE NATIONALE DES USINES RENAULT (S.**
**0267) 8 & 10, avenue Emile Zola**
**F-92109 Boulogne Billancourt Cédex (FR)**

## Description

L'invention concerne un moyeu de roue de véhicule automobile comprenant un dispositif capteur d'informations et un palier à corps roulants disposé dans un logement dudit moyeu dans lequel l'élément codeur est solidaire en rotation du moyeu et se déplace devant un capteur fixe.

La publication F.R.A 2570143 décrit un moyeu dans lequel l'élément codeur est fixé à la périphérie externe du moyeu sensiblement dans le plan d'un chemin de roulement du palier.

La publication F.R.A 2375599 décrit un moyeu de roue dans lequel une couronne dentée formant l'élément codeur est immobilisée par rapport au joint d'étanchéité du palier et déplace devant un élément capteur fixe.

Lorsque le moyeu est solidaire d'un tambour de freinage qui délimite avec la périphérie externe du moyeu le logement de frein, l'élément codeur ne peut plus être placé sur le moyeu. Par ailleurs, lorsque le palier à corps roulants est un roulement conventionnel placé dans un moyeu accolé au porte-fusée sur lequel est fixé le plateau de frein, le dispositif capteur ne peut plus satisfaire à l'agencement précité, en raison du faible espace disponible.

L'invention a donc principalement pour objet un moyeu de roue pour freins à tambour facilitant le montage d'un capteur de vitesse dans le but de permettre la réalisation d'un dispositif d'antiblocage de roues et/ou d'antipatinage pour véhicules équipés de freins à tambour. Cet objectif est atteint conformément à la caractéristique de la revendication 1.

On décrira ci-après un mode de réalisation du moyeu en référence au dessin annexé dans lequel,
— la figure 1 est une vue en coupe axiale du moyeu de frein à tambour monté sur une fusée de roue non motrice de véhicule automobile selon la ligne 1.1. de la figure 2.
— la figure 2 est une vue de face du moyeu suivant la flèche F de la figure 1.
— la figure 3 est une vue à une plus grande échelle du détail III de la figure 1.
— la figure 4 est une vue à une plus grande échelle du même détail III avec un agencement différent de la liaison entre le capteur et son support.

Un moyeu de roue non motrice comporte une fusée 10 débouchant à l'extérieur d'un porte-fusée 11 et portant à son extrémité filetée, l'écrou 12 et la rondelle de mise en contrainte axiale d'un palier 13 qui peut être à deux rangées de corps roulants 14 disposés entre une bague intérieure 15 fractionnée en deux parties et une bague extérieure 16 dont les extrémités portent respectivement un joint d'étanchéité 17.

Le palier 13 peut être constitué de 2 roulements conventionnels sans sortir pour autant du cadre de la présente invention.

Le palier 13 est disposé dans un logement 21 constitué par l'alésage d'un moyeu tournant 20 qui se prolonge radialement par un tambour de frein 23 dont la face extérieure porte les goujons de fixation non représentés de la roue du véhicule.

La bague extérieure 16 du palier est immobilisée dans le moyeu 20, radialement par serrage et axialement entre un épaulement 24 du logement 21 et une rondelle d'arrêt portée par le moyeu.

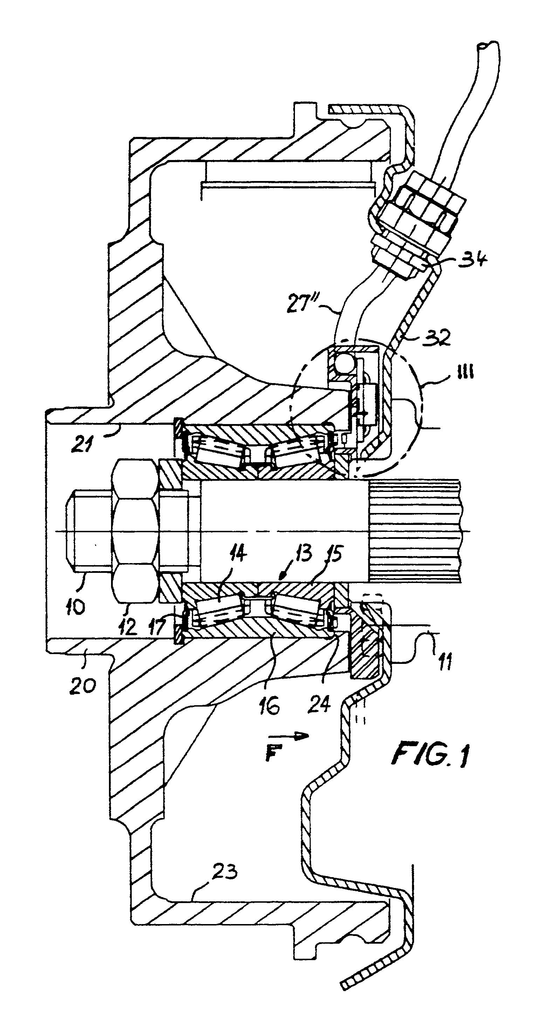

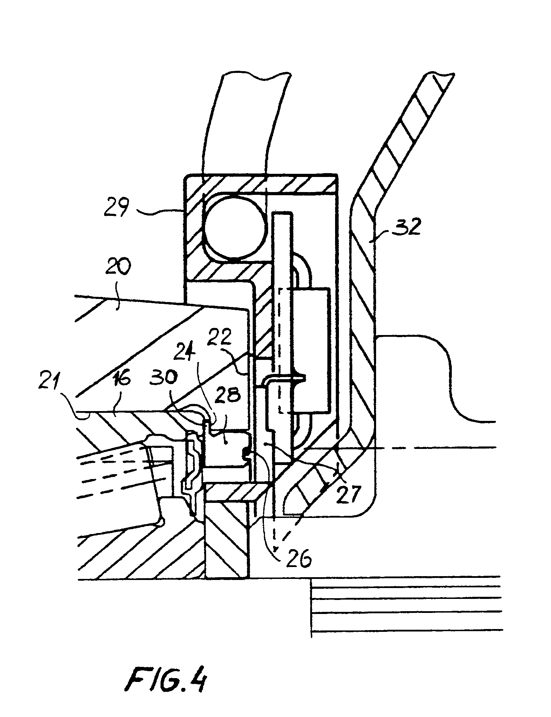

Selon l'invention, un dispositif capteur 25 d'informations, notamment de la vitesse de rotation de la roue, est constitué par un élément codeur 26 solidaire en rotation du moyeu 20 et d'un capteur 27 fixe. L'immobilisation de l'élément codeur 26 est avantageusement réalisée par intégration au joint d'étanchéité 17 au moment du moulage de ce dernier de telle façon qu'il soit positionné en regard de l'élément capteur. Tel que représenté dans la fig. 1, l'élément codeur affleure la face latérale externe du joint d'étanchéité. Selon une variante de l'invention (fig. 4), le support 28 du codeur 26 est une bague comportant une rainure circulaire dans laquelle est logé l'élément codeur 26 et ce support est placé dans le logement 21 de sorte que le codeur soit situé sensiblement dans le plan de la face latérale 22 du moyeu tournée vers le plan longitudinal du véhicule. Le support 28 possède à cet effet, un bord 30 radial annulaire susceptible de faciliter son immobilisation par pincement entre le flanc de la bague 16 du palier et l'épaulement 24.

La solidarisation entre l'élément codeur et son support peut être réalisée par d'autres moyens sans pour autant sortir du cadre de l'invention.

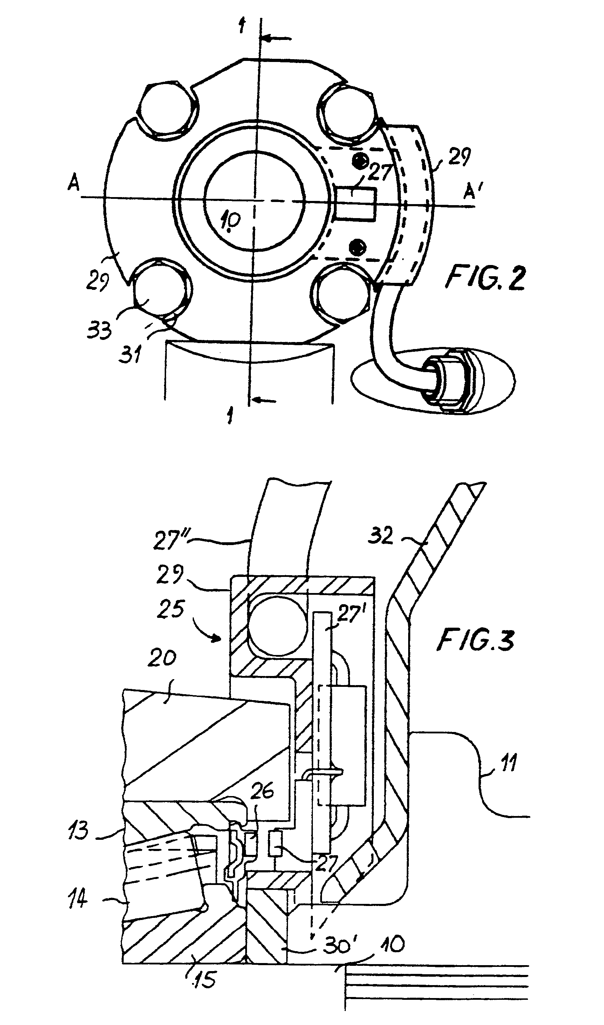

Le support 29 de l'élément capteur 27 est constitué par une plaque en matériau de préférence non magnétique, rendue solidaire d'une bague 30′ fixe montée sur la fusée 10 entre la bague intérieure 15 du palier et le porte-fusée 11. Le support 29 est agencé de telle façon que son positionnement angulaire par rapport au plateau de frein soit assuré. Dans l'exemple représenté fig. 2, le support 29 comporte une série d'encoches 31 qui assurent cette fonction en coopérant avec les vis de fixation 33 du plateau de frein 32. Par ailleurs, le support 29 est conçu de telle façon qu'il n'existe qu'une seule et unique possibilité de positionnement angulaire favorable au fonctionnement correct de l'élément capteur 27. De manière à s'affranchir de la variation d'entrefer entre l'élément codeur 26 et l'élément capteur 27 engendrée par le dévers angulaire de la roue selon son plan de symétrie vertical durant les virages, l'élément capteur 27 est positionné selon une direction horizontale A-A′ telle que représentée en fig. 2.

Le support 29 de l'élément capteur 27 a pour fonction complémentaire de supporter un circuit imprimé 27′ comprenant les éléments de protection de l'élément capteur 27 contre les surtensions et les inversions de polarité. En outre, il assure le maintien efficace du câble 27″ qui transporte les signaux vers la centrale de traitement en traversant le plateau de frein 32, en coopérant avec un élément 34 qui assure l'étanchéité contre la pénétration de pollution à l'intérieur de l'enceinte du frein.

Sans sortir du cadre de l'invention, il est bien évident que le dispositif capteur 25 peut être de tout type connu, bien que l'on ait décrit à titre d'exemple aucunement limitatif, le capteur en référence de la demande de brevet FR-A-2599794 déposée en France au nom de la demanderesse.

De même, l'invention n'est nullement limitée au mode de réalisation décrit et représenté, donné à titre d'exemple. En particulier, elle englobe les moyens équivalents techniques des moyens décrits ou leurs combinaisons si celles-ci réalisées dans l'esprit de l'invention ou mises en oeuvre dans le cadre d'une prise d'informations de la vitesse d'un moyeu tournant.

## Revendications

1. Moyeu (20) de roue de véhicule automobile comprenant un dispositif (25) capteur d'informations et un palier (13) à corps roulants (14) disposé dans un logement (21) dudit moyeu, dans lequel l'élément capteur (27) fixe est solidarisé avec un support (29) par rapport à la roue dans lequel l'élément codeur (26) est immobilisé par rapport au joint d'étanchéité du palier et est solidaire en rotation du moyeu pour se déplacer devant l'élément capteur (27) disposé coaxialement à l'élément codeur (26) dans une position radiale sensiblement égale à la valeur du rayon de l'élément codeur (26) et décalée longitudinalement d'une valeur maximale correspondant à l'entrefer autorisé par la technologie du capteur, caractérisé par le fait que le support (29) du capteur (27) comporte au moins un moyen (31) de positionnement angulaire dudit support par rapport à un plateau de frein (32), solidaire du porte-fusée (11) de la roue.

2. Moyeu selon la revendication 1, caractérisé par le fait que le moyen de positionnement angulaire du support (29) n'autorise qu'une position unique de l'élément capteur (27) selon une direction horizontale permettant de s'affranchir de la variation d'entrefer.

3. Moyeu selon l'une quelconque des revendications 1 à 2, caractérisé par le fait que le support (29) de l'élément capteur (27) porte en outre un circuit imprimé (27′) comportant les éléments de protection de l'élément capteur (27) contre les surtensions et les inversions de polarité.

4. Moyeu selon l'une quelconque des revendications 1 à 3, caractérisé par le fait que l'élément codeur (26) est placé dans un support (28) comportant un bord (30) radial annulaire d'immobilisation pincé entre un élément (16) tournant du palier (13) et un épaulement (24) d'immobilisation axiale dudit palier adjacent au logement (21) de l'élément codeur (26).

## Patentansprüche

1. Kraftfahrzeugradnabe (20), mit einer Meßfühleranordnung (25) und mit einem Lager (13) mit Wälzkörpern (14), das in einer Aussparung (21) der Nabe angeordnet ist, wobei der Meßfühler (27) an einer Halterung (29) bezüglich des Rades feststehend befestigt ist, in dem ein Signalgeber (26) bezüglich einer Dichtung des Lagers festgelegt ist und mit der Nabe drehfest verbunden ist, um sich dergestalt am Meßfühler (27) vorbeizubewegen, der koaxial zum Signalgeber in einer radialen Stellung angeordnet ist, die im wesentlichen gleich der Größe des Radius des Signalgebers (26) ist und in Längsrichtung um einen Maximalwert verschoben ist, der dem durch die Technologie des Fühlers ermöglichten Spalt entspricht, dadurch gekennzeichnet, daß die Halterung (29) des Meßfühlers (27) wenigstens eine Anordnung (31) aufweist, zur Winkeleinstellung der Halterung bezüglich einer Bremsplatte (32), die mit dem Achsschenkelträger (11) des Rades verbunden ist.

2. Nabe nach Anspruch 1, dadurch gekennzeichnet, daß die Anordnung zur winkelmäßigen Einstellung der Halterung (29) nur eine einzige Stellung für den Meßfühler (27) gemäß einer waagrechten Richtung ermöglicht, um sich so von der Spaltvariation zu befreien.

3. Nabe nach einem der Ansprüche 1 oder 2, dadurch gekennzeichnet, daß die Halterung (29) des Meßfühlers (27) zusätzlich einen gedruckten Schaltkreis (27′) aufweist, der mit Bauteilen zum Schutz des Meßfühlers (27) gegen Überspannungen und Polaritätsumkehrungen bestückt ist.

4. Nabe nach einem der Ansprüche 1, 2 oder 3, dadurch gekennzeichnet, daß der Signalgeber (26) in einer Halterung (28) angeordnet ist, die einen radialen, ringförmigen Feststellrand (30) aufweist, der zwischen einem sich drehenden Teil (16) des Lagers (13) und einer axialen Feststellschulter (24) des Lagers in der Nähe der Aussparung (21) des Signalgebers (26) eingeklemmt ist.

## Claims

1. A motor vehicle wheel hub (20) comprising a data pickup device (25) and a bearing (13) having rolling bodies (14) which is disposed in a housing (21) of said hub, in which the fixed pickup element (27) is fixed with a support (29) relative to the wheel, in which the encoder element (26) is immobilised with respect to the sealing joint of the bearing and is fixed in respect of rotary movement with the hub for displacement in front of the pickup element (27) which is disposed coaxially with the encoder element (26) in a radial position substantially equal to the value of the radius of the encoder element (26) and displaced longitudinally by a maximum value corresponding to the air gap permitted by the technology of the pickup, characterised in that the support (29) of the pickup (27) comprises at least one means (31) for angular positioning of said support with respect to a brake backplate (32) itch is fixed with respect to the stub axle carrier (11) of the wheel.

2. A hub according to claim 1 characterised in that the means for angular positioning of the support (29) permits only a single position of the pickup element (27) in a horizontal direction, to afford freedom from the effect of a variation in air gap.

3. A hub according to either one of claims 1 and 2 characterised in that the support (29) for the pickup element (27) also carries a printed circuit (27') comprising the elements for protecting the pickup element (27) from excess voltages and polarity reversals.

4. A hub according to any one of claims 1 to 4 characterised in that the encoder element (26) is placed in a support (28) comprising an annular radial immobilisation edge (30) gripped between a rotating element (16) of the bearing (13) and a shoulder (24) for axial immobilisation of said bearing adjacent to the housing (21) of the encoder element (26).

FIG. 1

FIG.2

FIG.3

FIG.4